# EUROPEAN PATENT SPECIFICATION

(11) **EP 2 327 495 B1**
(45) Date of publication and mention of the grant of the patent: **23.04.2014**
(21) Application number: 09811423.4
(22) Date of filing: 26.08.2009
(51) Int. Cl.: B23D 45/04, B23D 45/16, B27B 5/29

(54) **TABLETOP CUTTING MACHINE**
TISCHSCHNEIDEMASCHINE
MACHINE DE COUPE DE DESSUS DE TABLE

(30) Priority: 04.09.2008 JP 2008226939
(43) Date of publication of application: 01.06.2011
(73) Proprietor: Makita Corporation, Anjo-shi, Aichi 446-8502 (JP)
(72) Inventor: KANI Toshiyuki, Anjo-shi Aichi 446-8502 (JP); YAMAMURA Goh, Anjo-shi Aichi 446-8502 (JP)
(74) Representative: Schmidtchen, Jürgen Christian
(86) International application number: PCT/JP2009/064848
(87) International publication number: WO 2010/026896

(56) References cited:
- EP-A2- 1 570 963
- GB-A- 656 947
- JP-A- 2008 044 034
- JP-U- 60 064 213
- JP-U- 62 088 052
- US-A- 5 249 496
- US-A1- 2002 088 327
- US-A1- 2003 024 365

## Description

### Technical Field

This invention relates to a tabletop cutter for performing a cutting of a material to be cut placed on a table.

### Background Art

US 2003/024965 A1 discloses a cutting device. A tabletop cutter of this type is provided with a table on which a material to be cut is placed, and a cutter main body supported at the rear portion of this table so as to allow a vertical moving operation. The main body of the cutter is provided with a circular cutting blade rotated by an electric motor as a drive source. This cutter main body is lowered to cut the rotating rotary blade into the material to be cut on the table, whereby a cutting is performed.

In a so-called miter saw, which is an example of this type of tabletop cutters, the table is supported on a base so as to be horizontally rotatable. By rotating the table, the cut-in angle of the saw edge with respect to the material to be cut is arbitrarily changed, making it possible to perform a so-called angular cutting.

The rotating position of the table can be set at a fixed angular position or an arbitrary angular position by a rotation lock mechanism. Techniques related to such a rotation lock mechanism are disclosed in the patent documents as mentioned below.

These conventional rotation lock mechanism are each provided with a first system of a so-called positive lock type for setting the table at a plurality of preset angular positions, and a second system for setting the table at an arbitrary angular position. In the positive type rotation lock mechanism of the first system, a lock pin provided on the lower surface of a table is caused to advance and retreat with respect to positioning holes at fixed angular intervals, whereby the table is locked or unlocked at a fixed angular position. In the rotation lock mechanism of the second system, a lock screw provided on the tableside is pressed against the base to lock the table at an arbitrary angular position, and thus, locking and unlocking are performed through tightening and loosening operation on the lock screw.

The above-mentioned lock screw is provided at a grip portion grasped by a user at the time of rotating the table. Thus, the user, having grasped the grip portion, rotates the table to an arbitrary angular position, where he rotates the grip portion around its axis to tighten the lock screw, thereby locking the table at this angular position.

### Prior art documents

### Patent documents

Patent Document 1: US Patent Number 6513412
Patent Document 2: Japanese Laid-Open Patent Publication No. 9-207023
Patent Document 3: Japanese Laid-Open Patent Publication No. 2007-83610

### Summary of the invention

### Problems to be solved

However, the latter of the above two systems of rotation lock mechanisms, i.e., the rotation lock mechanism of the second system, has the following problem. That is, in the rotation lock mechanism of the second system, the grip portion and the lock screw are directly connected to each other (i.e., integrated with each other in terms of power transmission), so that rotating the grip portion always causes the lock screw to rotate to the locking side or to the unlocking side. Further, for the sake of convenience in table rotation, the grip portion is usually arranged in front of the user.

Thus, the user is obliged to search for the requisite wrist position for easily rotating this grip portion by repeatedly grasping and releasing the grip portion. If the user tries to search for a satisfactory wrist position while grasping the grip portion, it can happen that the lock screw abuts the base in a wrist position where he can exert no force, or the grip portion may be loosened to the contrary.

The present invention has been made with a view toward solving the above problem in the prior art. It is an object to achieve an improvement in terms of the operability of the grip portion at the time of locking or unlocking the table.

### Means for solving the Problems

To achieve the above object, a tabletop cutter as defined in claim 1 is provided.

According to the tabletop cutter as defined in a first aspect, by disengaging a clutch portion, it is possible to attain a state (idling state) in which the rotational movement due to the rotation of the grip portion is not transmitted to a lock arm, so that, at the time of operation, a user can firstly grasp the grip portion and adjust the wrist position before performing a locking operation or an unlocking operation in this state. By placing the clutch portion in a power transmission state, a rotational movement due to the rotation of the grip portion is transmitted to the lock arm, making it possible to set the table between a locked state and an unlocked state.

According to the tabletop cutter as defined in a second aspect, when the grip portion is displaced to a rotational operation position on an operation shaft, the clutch portion is placed in the power transmission state. And, by rotating the grip portion around the operation shaft in this state, the lock arm is moved to a lock position or an unlock position, making it possible to lock the tabletop to prohibit its rotation or to unlock the same to allow its rotation.

In contrast, in a state in which the grip portion is located at a non-operation position on the operation shaft, the clutch portion is disengaged, and the grip portion is placed in a state in which it is blocked from the lock arm in terms of its rotation. Thus, if the grip portion is rotated at this non-operation portion, the lock arm is not displaced, so that the table is maintained in the locked state or the unlocked state in terms of its rotation.

In this way, according to the second aspect, only in the state in which the grip portion has been moved to the operation position, rotating operation of the grip portion is effective and the lock arm can be moved, making it possible to lock or unlock the table; on the other hand, with the grip portion being located at the non-operation position, idling occurs, and an operational movement due to the rotation of the grip portion is not transmitted to the lock arm, with the result that the table is maintained in the locked or unlocked state. Accordingly, even if the grip portion is rotated around the operation shaft at the time of rotation of the table with the grip portion grasped at the non-operation position, the lock arm is not moved, so that the table is reliably maintained in the unlocked state. Further, in the state in which the table is locked in its rotation, only idling occurs even if rotating operation is performed on the grip portion, and the rotational power is not transmitted to the lock arm, so that the table is maintained in the rotation-locked state.

Further, according to a constitution as defined in the second aspect, by displacing the grip portion to the operation position side in the operation shaft direction with the grip portion grasped and rotating the grip portion continuously around the operation shaft while maintaining the grasping state, it is possible to switch the table between the rotation-locked state and the rotation-unlocked state. Thus, the user can perform a series of operations without greatly changing the direction in which the user's hand grasping the grip portion applies the force, so that the burden on the wrist can be reduced, which helps to enhance the operability of the lock mechanism.

According to the tabletop cutter as defined in a third aspect, when the grip portion is displaced to the rotating operation position, the grip portion is engaged and integrated with an operation cam via the clutch portion as a result of the rotating operation. As a result, when a rotating operation of the grip portion is performed, the lock arm is moved to the lock position through a rotation of the operation cam, or it is moved to the unlock position to lock or unlock a rotation of the table.

According to the tabletop cutter as defined in a fourth aspect, when the operation on the grip portion is aborted, the grip portion is automatically returned to the non-operation position by a spring biasing force. At this non-operation position, the grip portion idles, and the table is maintained in the rotation-locked state or the rotation-unlocked state.

According to the tabletop cutter as defined in a fifth aspect, when the user rotates the grip portion to the right, the rotation-locked state of the table is released (unlocked), and when the user rotates it to the left, the table is locked in its rotation. In contrast, in the conventional well-known rotation lock mechanism in which the table is rotation-locked through tightening of the lock screw, the table is locked by rotating the lock screw to the right, and is unlocked by rotating the lock screw to the left. In the tabletop cutter according to claim 6, the rotating direction of the grip portion regarding the locking operation and the unlocking operation is reverse to that of the conventional screw-tightening type lock mechanism.

Usually, the user lies on the left-hand side of the grip portion and grasps the grip portion with his right hand. In this case, the user can rotate the grip portion to the right with his right hand to effect unlocking, and move the grip portion as it is to the side nearer to him to rotate the table to the left; conversely, by pushing the grip portion to the right, the user can rotate the table to the right.

In this way, in the case of a right-handed user, the user lies on the left-hand side of the grip portion, and grasps the grip with his right hand, so that, when performing unlocking operation on the grip portion and when rotating the table while maintaining the unlocked state, the direction in which the user's right wrist is twisted is an upwardly convex direction, which is easier for the user. In this respect, the burden on the right wrist can be reduced, so that it is possible to achieve an improvement in terms of the operability of the rotation lock mechanism.

According to the tabletop cutter as defined in a sixth aspect, the lock arm is supported so as to be vertically tiltable around a pivot such that when one end portion thereof is moved downwards by an operation cam, the other end portion thereof is moved upwards, and that when one end portion thereof is moved upwards, the other end portion is moved downwards. Further, between the pivot and one end portion, the lock arm is downwardly biased by a compression spring, so that one end portion of the lock arm is biased downwardly, and the other end portion thereof is biased upwardly. A base side is held between the other end portion of the lock arm and the lower surface of the table to thereby control the rotation of the table, so that, by causing the lock arm to serve as a "lever," the base side is held by the biasing force of the compression spring to lock the table in its rotation.

According to the tabletop cutter as defined in a seventh aspect, with one end portion of the lock arm engaged with the operation cam, and the other end portion thereof placed on the pivot, the lock arm is screwed up to a tableside retention column portion between the pivot and one end portion thereof, whereby the lock arm can be mounted in a state in which it is biased toward the tableside. By the lock arm being screwed up to the retention column portion in this way, it is possible to assemble the lock arm to the lower surface of the table substantially in a floating state, whereby it is possible to achieve an improvement in the assembility of the rotation lock mechanism.

### Brief Description of the Drawings

Fig. 1 is a general side view of a tabletop cutter according to an embodiment.
Fig. 2 is a longitudinal side sectional view of a table, showing a first and a second lock mechanism incorporated in an extension portion. The diagram shows the first and the second lock mechanism in the lock state. A grip portion is shown to return to a non-operation position.
Fig. 3 is a sectional view taken along the arrow line (III)-(III) of Fig. 2. The diagram shows an operation cam located at a lock position.
Fig. 4 is a longitudinal side sectional view of the table, showing the first and the second lock mechanism incorporated in the extension portion. The diagram shows the first lock mechanism in the lock state, and the second lock mechanism in the unlock state. The grip portion is shown to return to the non-operation position.
Fig. 5 is a sectional view taken along the arrow line (V)-(V) of Fig. 4. The diagram shows the operation cam located at the unlock position.
Fig. 6 is a longitudinal side sectional view of the table, showing the first and the second lock mechanism incorporated in the extension portion. The diagram shows a state in which both the first and second lock mechanisms are unlocked. The grip portion is shown to locate at the non-operation position.
Fig. 7 is a perspective view, as seen obliquely from the front left-hand side, of the grip portion and the periphery thereof. The diagram shows the grip portion located at the non-operation position. The operation cam is shown to locate at the lock position.
Fig. 8 is a perspective view, as seen obliquely from the front left-hand side, of the grip portion and the periphery thereof. The diagram shows the grip portion to be pushed in to an operation position. The operation cam is shown to locate at the lock position.
Fig. 9 is a perspective view, as seen obliquely from the front left-hand side, of the grip portion and the periphery thereof. The diagram shows the grip portion to be pushed in to the operation position. The operation cam is shown to locate at the unlock position.
Fig. 10 is a longitudinal sectional view of a table extension portion provided with a second lock mechanism according to a second embodiment. The diagram shows the first and the second lock mechanism in the lock state. The grip portion is shown to return to the non-operation position.
Fig. 11 is a sectional view taken along the arrow line (XI) - (XI) of Fig. 10. The diagram shows the operation cam located at the lock position.
Fig. 12 is a longitudinal sectional view of the table extension portion provided with the second lock mechanism of the second embodiment. The diagram shows the first lock mechanism in the locked state, and the second lock mechanism in the unlocked state. The grip portion is shown to return to the non-operation position.
Fig. 13 is a sectional view taken along the arrow line (XIII)-(XIII) of Fig. 12. The diagram shows the operation cam located at the unlock position.

### Best Modes for carrying out the Invention

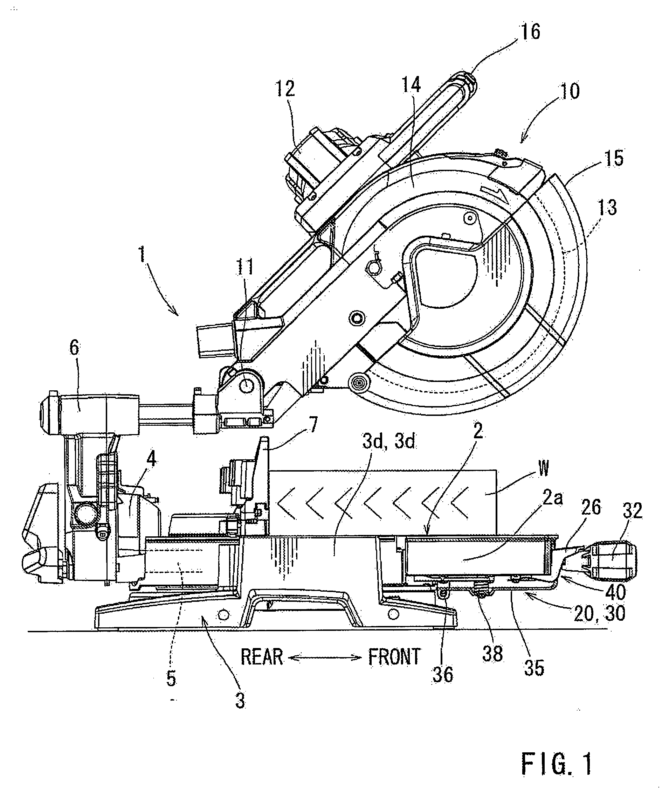

Next, an embodiment will be described with reference to Figs. 1 through 9. Fig. 1 is a general view of a tabletop cutter 1 according to a first embodiment. A user lies on the right-hand side of the tabletop cutter 1. In the following, the right-hand side in the longitudinal direction as seen in Fig. 1, which is the user side, is the front side, and the left-hand side is the rear side. Regarding the horizontal direction, the user serves as a reference as well.

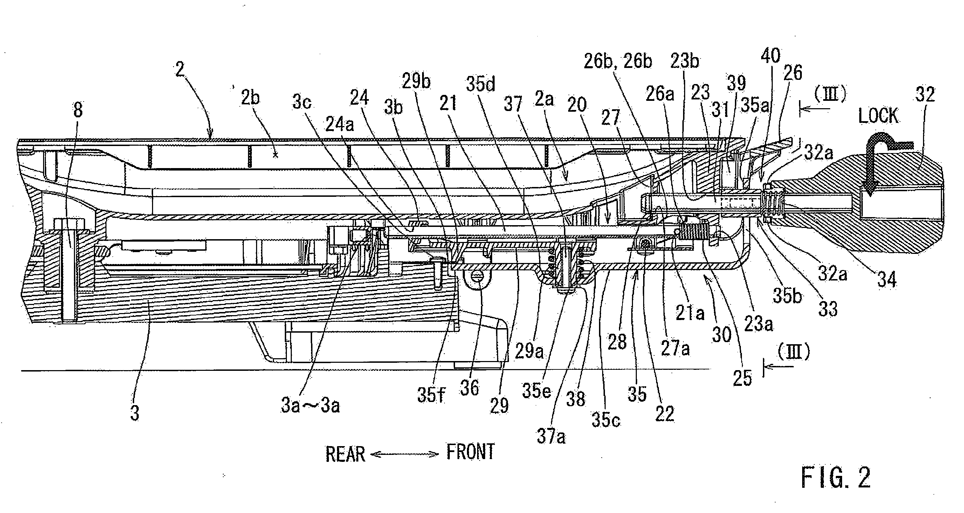

The tabletop cutter 1 is provided with a table 2 on which a material W to be cut is placed, and a base 3 supporting the table 2 so as to allow it to rotate horizontally. As shown in Fig. 2, the table 2 is supported so as to be horizontally rotatable via a pivot 8 provided on the upper surface of the base 3.

At the rear of the table 2, there is supported a cutter main body 10 through a lateral tilting mechanism 4 and upper and lower slide mechanisms 5 and 6. The cutter main body 10 is supported by the upper slide mechanism via a pivot 11. The cutter main body 10 is provided with a circular edge blade 13 rotating using an electric motor 12 as a drive source. The upper side of the edge blade 13 is covered with a blade case 14, and the lower side thereof is covered with a movable cover 15. When the cutter main body 10 is lowered, the movable cover 15 is opened in synchronization therewith to expose the lower portion of the edge blade 13. The blade case 14 is provided with a handle portion 16 grasped by the user when the user moves the cutter main body 10 vertically.

A positioning fence 7 is arranged on the upper surface side of the table 2 for positioning the material W in the table surface direction (the horizontal direction as seen in Fig. 1). The positioning fence 7 is mounted so as to be astride auxiliary table portions 3d provided on the right and left sides of the base 3, and a slight gap is provided between the lower end portion thereof and the upper surface of the table 2. The upper surfaces of the right and left auxiliary table portions 3d and the upper surface of the table 2 are set to be flush with each other.

The material W to be cut is fixed to the base 3 side between the right and left auxiliary tables 3d while in contact with the positioning fence 7. The table 2 is rotated with respect to the fixed material W to be cut, and, integrally therewith, the cutter main body 10 is swung to the right or left as seen from the user, whereby it is possible to obliquely bring the edge blade 13 into the material W to be cut to perform so-called oblique cutting (miter cutting). The basic construction of the tabletop cutter 1 as described above is the same as that in the prior art, and no particular change therein is required in this embodiment.

The table 2 is of a planar configuration in which an extension portion 2a protrudes from the front portion of a circular portion thereof to the user side in a fixed width. In the upper surface of the range of the table 2 from the portion near the center thereof to the forward end of the extension portion 2a, there is provided an edge entrance allowing the edge blade 13 to enter. Two systems of rotation lock mechanism 20 and 30 for locking the rotating position of the table 2 are provided mainly in the extension portion 2a, which are shown in detail from Fig. 2 onward. Of the two systems of lock mechanisms 20 and 30, the second lock mechanism 30 characterizes the tabletop cutter 1 of this embodiment; regarding the first lock mechanism 20, it may be of the same configuration as that in the prior art, so it will be briefly described below.

The first lock mechanism 20 includes a so-called positive lock mechanism a function of positioning the table 2 at one of a plurality of predetermined angular positions. In contrast, the second lock mechanism 30 has a function of positioning the table 2 at an arbitrary angular position within a fixed range.

In the first lock mechanism 20, a lock pin 21 provided on the lower surface of the table 2 is caused to advance or retreat to and from one of a plurality of positioning holes 3a provided in the base 3 at a fixed angular interval, whereby the table 2 is locked or unlocked at a fixed angular position. The lock pin 21 is borne at two front and rear points of a support hole 23a of a front side support wall portion 23 and a support hole 24a of a rear side support wall portion 24 provided on the lower surface of the extension portion 2a of the table 2 so as to allow longitudinal displacement in the axial direction. In front of the lock pin 21, an engagement pin 21a is fixed in position so as to protrude on both radial sides. A compression spring 25 is provided between the engagement pin 21a and the front side support wall portion 23. The lock pin 21 is biased axially backwards (to the left as seen in Fig. 2) by the compression spring 25. Both end portions of the engagement pin 21a are engaged with an operation lever 26.

The operation lever 26 is supported in front of the extension portion 2a via a pivot 22 so as to be vertically tiltable. The operation lever 26 is of a fork-like configuration and has leg portions 26b, between which the lock pin 21 is arranged. Engagement groove portions 26a are respectively provided in the inner surfaces of both leg portions 26b. Both end portions of the engagement pin 21a respectively enter the two engagement groove portions 26a. As described above, the engagement pin 21a is biased backwards by the compression spring 25. Thus, the operation lever 26 is indirectly spring-biased so as to be upwardly tilted via engagement between the spring-biased engagement pin 21a and the engagement groove portions 26a.

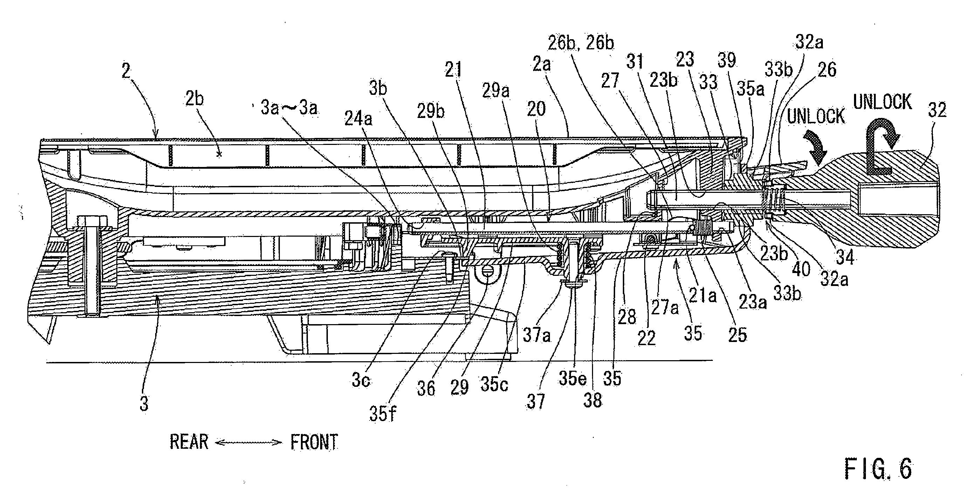

As shown in Fig. 2, in the state in which the operation lever 26 is located at the upper side lock position, the lock pin 21 is located at a lock position where it has been displaced backwards by the compression spring 25. The operation lever 26 is downwardly tilted against the compression spring 25, which acts indirectly. As shown in Fig. 6, the operation lever 26 is tilted to the lower unlock position, whereby the lock pin 21 is displaced to the unlock position on the axially front side against the compression spring 25 via engagement between the engagement pin 21 and the engagement groove portions 26a.

The rear end portion of the lock pin 21 protrudes backwards from the rear side support wall portion 24. This protruding portion is inserted into a positioning hole 3a provided in the base 3, whereby the rotating position of the table 2 with respect to the base 3 is locked. There are provided a plurality of positioning holes 3a at a plurality of angular positions along the circumference at the center of which the pivot 8 is located. The table 2 is rotated, and the rear end portion of the lock pin 21 is inserted into the positioning hole 3a of an arbitrary angle, whereby the table 2 is set at that angular position. As described above, when the operation lever 26 is downwardly tilted, the lock pin 21 is displaced forwards, and the rear end portion thereof is pulled out of the positioning hole 3a, so that the lock state of the table 2 is released, making it possible to rotate the table 2.

In this way, in the first lock mechanism 20, the lock pin 21 is inserted into or pulled out of a plurality of positioning holes 3a provided at predetermined angular positions on the base 3 side, whereby the table 2 is set in position at a fixed angular position (positive lock mechanism).

Apart from the above-described first lock mechanism 20, the tabletop cutter 1 of this embodiment is provided with a second lock mechanism 30. The second lock mechanism 30 is also provided in the extension portion 2a of the table 2. The support wall portion 23 provided in front of the extension portion 2a is provided with another support hole 23b above the support hole 23a mentioned above. An operation shaft 31 is supported by this support hole 23b so as to be rotatable and axially movable. The rear end portion of the operation shaft 31 is inserted into a support hole 27a of an auxiliary wall portion 27 provided parallel to the rear side of the support wall portion 23. A retaining ring 28 is attached to the rear end portion of the operation shaft 31 protruding backwards from the support hole 27a. Thus, the operation shaft 31 is limited in its displacement in the axial detaching (forward) direction.

The front portion of the operation shaft 31 protrudes on the front side of the extension portion 2a. A grip portion 32 is mounted to the front portion of the operation shaft 31. The grip portion 32 is fixed in position with respect to the front portion of the operation shaft 31. Thus, when the user grasps the grip portion 32 and moves it longitudinally or rotates it around the shaft, the operation shaft 31 moves axially back and forth integrally therewith, or rotates around the shaft. Mesh teeth 32a are provided at the rear end portion of the grip portion 32. In this embodiment, there are provided four mesh teeth 32a at equal peripheral intervals.

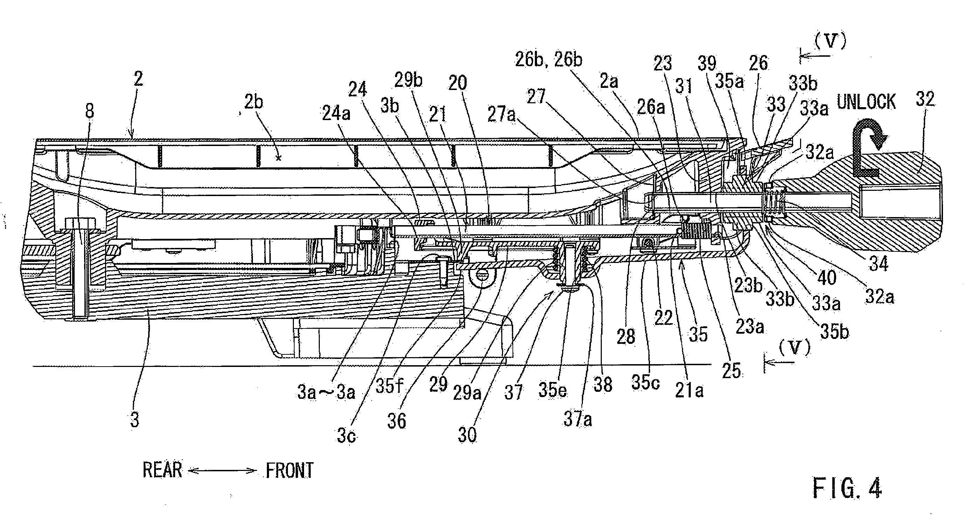

Between the grip portion 32 and the support wall portion 23, an operation cam 33 is attached to the operation shaft 31. The operation cam 33 is supported so as to be capable of relative rotation with respect to the operation shaft 31 around the axis thereof. The operation cam 33 is integrally provided with two mesh teeth 33a protruding radially. The two mesh teeth 33a protrude radially from two positions at equal peripheral intervals. At the protruding distal ends of the mesh teeth 33a, there are integrally provided engagement portions 33b so as to further protrude radially. As shown in Fig. 4, the longitudinal width (the width dimension in the longitudinal direction) of the two engagement portions 33b is smaller than the longitudinal width of the mesh teeth 33a.

A compression spring 34 is provided between the operation cam 33 and the grip portion 32. The grip portion 32 is biased away from the operation cam 33 (toward the non-operation position side) by the compression spring 34, and the operation cam 33 is biased backwards. The operation cam 33 is limited in its backward displacement by the support wall portion 23. Thus, the longitudinal displacement of the operation cam 33 is substantially limited, with the result that the grip portion 32 is biased forward (toward the non-operation position side) by the compression spring 34.

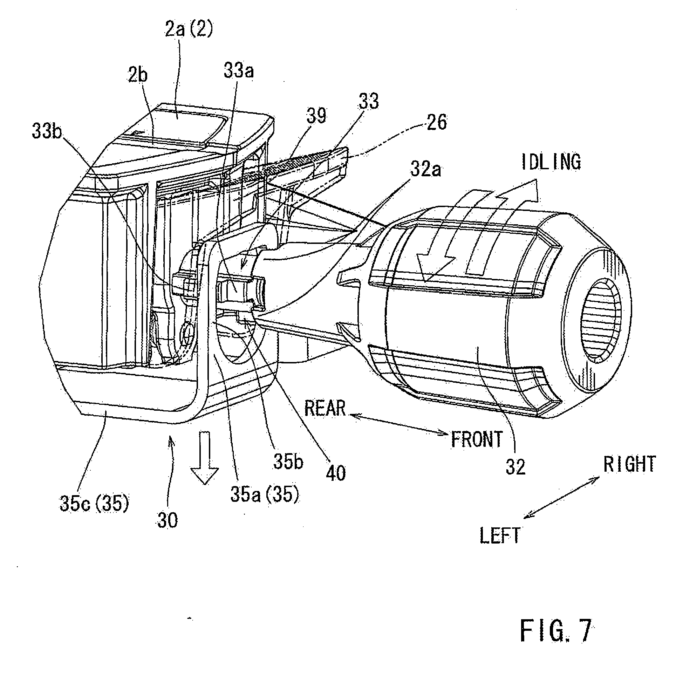

Figs. 7 through 9 show the operation of the grip portion 32 and the resultant engagement thereof with the operation cam 33. Fig. 7 shows a state in which no operation is being performed on the grip portion 32. In this state, the mesh teeth 32a of the grip portion 32 are not in mesh with the mesh teeth 33a of the operation cam 33, so that the grip portion 32 idles together with the operation shaft 31 with respect to the operation cam 33. Thus, even if the grip portion 32 is erroneously rotated, the lock state or the unlock state of the second lock mechanism 30 is maintained at it is.

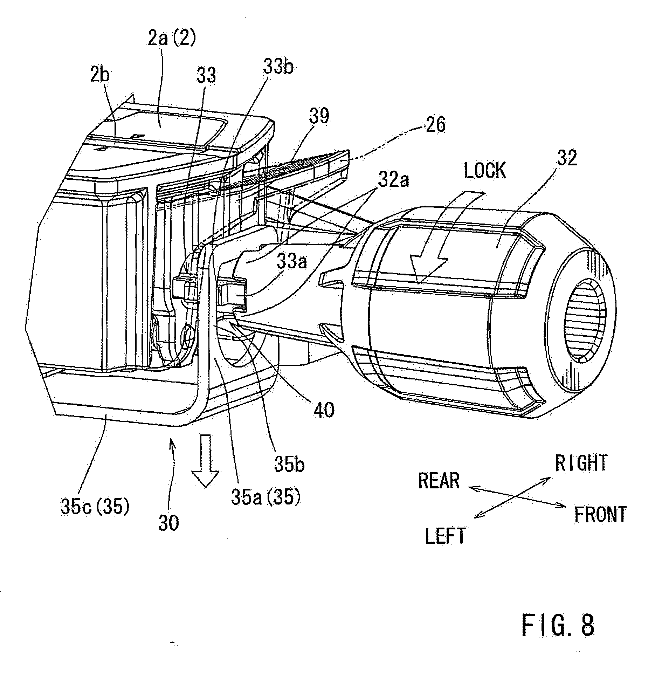

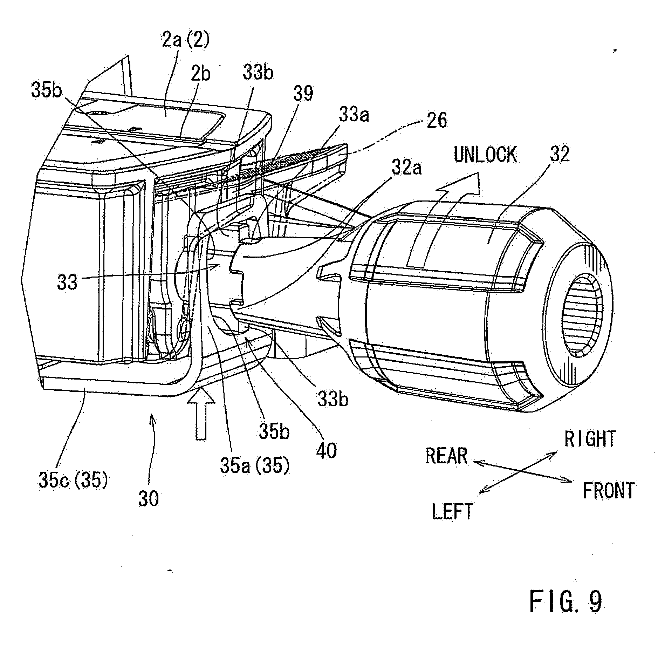

As shown in Fig. 8 and 9, when the user pushes the grip portion 32 toward the operation position on the rear side against the compression spring 34, the mesh teeth 32a thereof are brought into mesh with the mesh teeth 33a of the operation cam 33 in the rotating direction. When the mesh teeth 32a of the grip portion 32 and the mesh teeth 33a of the operation cam 33 are brought into mesh with each other, they are integrated with each other with respect to the rotating direction. Thus, when the grip portion 32 is rotated in this operation position (a mesh state), the operation cam 33 rotates integrally therewith. As shown in Fig. 8, when the grip portion 32 is rotated to the left, the second lock mechanism 30 operates in the lock side to lock the rotation of the table 2. In contrast, as shown in Fig. 9, when the grip portion 32 is rotated to the right, the second lock mechanism 30 operates in the unlock side to allow the table 2 to rotate.

As can be seen from the above, the mesh teeth 32a of the grip portion 32 and the mesh teeth 33a of the operation cam 33 form a mesh type clutch portion 40. When the mesh teeth 32a and the mesh teeth 33a are brought into mesh with each other, the clutch portion 40 is placed in a power transmission state, and the rotation of the grip portion 32 is transmitted to a lock arm 35 via the operation cam 33. When the mesh teeth 32a and the mesh teeth 33a are brought out of mesh with each other, the clutch portion 40 is disengaged, and the grip portion 32 idles, with the result that the lock arm 35 does not move, so that the rotation-lock state or the rotation-unlock state of the table 2 is maintained. The operation of the second lock mechanism 30 will be described in detail below.

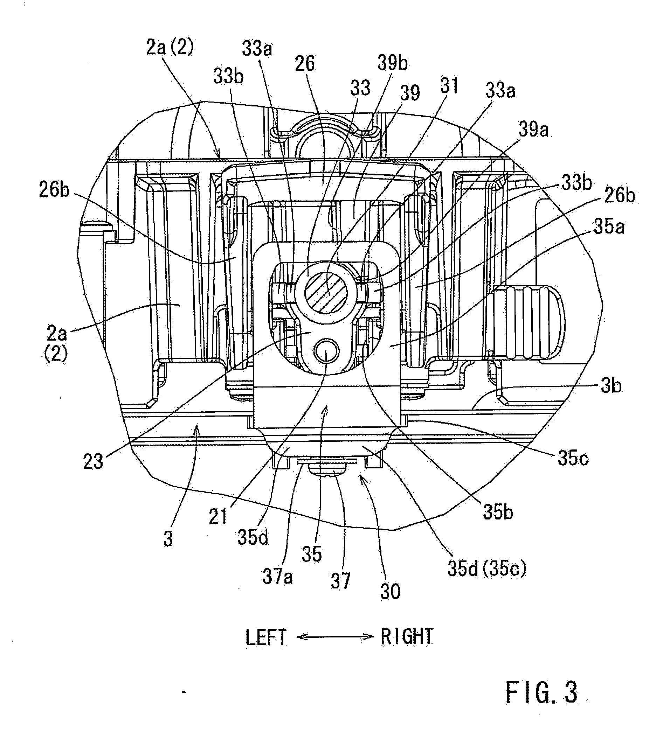

The rotation range of the operation cam 33 is limited in a range of approximately 90° by a stopper block 39. The stopper block 39 is provided in front of the extension portion 2a integrally with the front surface of the support wall portion 23. As shown in Fig. 3, the stopper block 39 is located in the upper right-hand side of the operation cam 33 as seen from the user side. The lower surface of the stopper block 39 constitutes a lock side stopper surface 39a, and the left-hand side surface thereof constitutes an unlock side stopper surface 39b. In the lock state of the table 2 shown in Fig. 3, one mesh tooth 33a and one engagement portion 33b of the operation cam 33 abut the lock side stopper surface 39a to limit the counterclockwise rotation thereof. In this state, the two engagement portions 33b protrude to the right and left. As described below, in the state in which the operation cam 33 is located at this position, the table 2 is in the rotation-lock state.

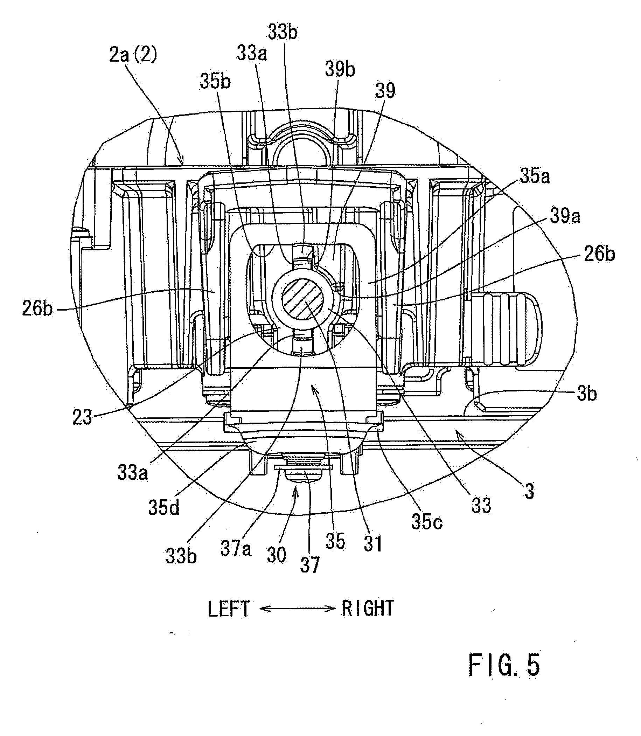

When, as shown in Fig. 5, from the state in which one mesh tooth 33a and one engagement portion 33b abut the stopper surface 39a of the stopper block 39, the operation cam 33 rotates by approximately 90° clockwise (to the right) as seen from the user side, the other mesh tooth 33a and the other engagement portion 33b thereof abut the unlock side stopper surface 39a of the stopper block 39 to limit the clockwise rotation thereof. In this state, the two engagement portions 33b protrude upwards and downwards. As described below, in this state, the table 2 is in the unlock state.

In this way, by pushing the grip portion 32 to the operation position, and rotating it within the range of approximately 90°, it is possible to rotate the operation cam 33 to the lock position where the engagement portions 33b protrude to the right and left and to the unlock position where they protrude upwards and downwards. In the case of this embodiment, when the grip portion 32 is rotated to the left (counterclockwise as seen from the user), one mesh tooth 33a and one engagement portion 33b abut the stopper surface 39b on the lock side (lower surface side) of the stopper block 39 to thereby lock the rotation of the table 2. In contrast, when the grip portion 32 is rotated to the right (clockwise as seen from the user), the other mesh tooth 33a and the other engagement portion 33b abut the stopper surface 39a on the lock side (left side surface) of the stopper block 39 to thereby unlock the rotation of the table 2. As can be seen from this respect, regarding the rotating direction of the grip portion 32, the rotating direction is contrary to that in the case where lock is performed by tightening a conventional fixation screw (right-hand screw).

When the user aborts the operation of pushing the grip portion 32, the grip portion 32 is returned to the non-operation position in the front side by the compression spring 34. As shown in Fig. 7, when the grip portion 32 is returned to the non-operation position, the mesh engagement of the mesh teeth 32a with the mesh teeth 33a is released. As a result, if rotating operation is performed on the grip portion 32 at this non-operation position, the operation cam 33 does not rotate, so that the grip portion 32 idles. In this idling state, the operation cam 33 is retained at the lock position or the unlock position.

Through the switching of the operation cam 33 from the lock position to the unlock position or vice versa, the lock arm 35 is switched from the lock position to the unlock position or vice versa.

The lock arm 35 is arranged to extend along the lower side of the extension portion 2a. Generally speaking, the lock arm 35 is bent into an L-shape, and a vertical portion 35a in the front side thereof extends upward along the front surface of the extension portion 2a. A switching hole 35b is formed in the vertical portion 35a. The operation cam 33 is situated within the switching hole 35b. Thus, in the state in which, the operation cam 33 is located at the lock position as shown in Fig. 3, the engagement portions 33b protrude to the right and left, so that the upper edge portion of the switching hole 35b abuts a side portion of the operation cam 33 (the portion constituting the cylindrical side surface spaced apart from the engagement portions 33b and nearer to the axis of the operation shaft 31 than the engagement portions 33b), with the result that the vertical portion 35a is displaced downwards to cause the lock arm 35 to be located at the lock position.

In contrast, in the state in which, the operation cam 33 is located at the unlock position as shown in Fig. 5, the two engagement portions 33b thereof protrude upwards and downwards, so that the vertical portion 35a is lifted by the engagement portion 33b protruding upwards to cause the lock arm 35 to be located at the unlock position.

In both the lock state and the unlock state, the vertical portion 35a is supported from below by the operation cam 33.

A lateral portion 35c of the lock arm 35 is borne from below by a pivot 36 and a connection screw 37. A circular recess 35d is provided substantially at the center in the longitudinal direction (front-and-rear direction) of the lateral portion 35c. An insertion hole 35e is provided at the bottom of the recess 35d. Above the range of the lateral portion 35c from the recess 35d to the rear end portion 35f, there is located a lateral wall portion 29 provided integrally with the extension portion 2a of the table 2. In front of the lateral wall portion 29, there is provided a retention column portion 29a so as to protrude downwardly. The lower end portion of the retention column portion 29a is inserted into the insertion hole 35e of the lock arm 35 so as to be capable of relative displacement. A compression spring 38 is provided around the retention column portion 29a and between the lateral wall portion 29 and the bottom portion of the recess 35d. The lateral portion 35c is biased downwards by the compression spring 38.

A flange portion 37a is mounted to the lower end portion of the retention column portion 29a by the connection screw 37. The flange portion 37a has a diameter larger than that of the insertion hole 35e. The lateral portion 37 of the lock arm 35 is supported by the connection screw 37 including the flange portion 37a so as not to be detached with respect to the retention column portion 29a.

Between the recess 35d of the lateral portion 35c and the rear end portion 35f, the lateral portion 35c is borne from below by the pivot 36. The lateral portion 35c and the lock arm 35 are tilted vertically using the pivot 36 as the fulcrum. When the lateral portion 35c tilts vertically using the pivot 36 as the fulcrum, the lower end portion of the retention column portion 29a advances and retreats with respect to the insertion hole 35e of the lock arm 35 (a relative displacement in the vertical direction). When the lock arm 35 is tilted such that the portion of the lateral portion 35c in the front side of the pivot 36 is displaced upwardly, the portion thereof in the rear side of the pivot 36, i.e., the rear end portion 35f, is displaced downwardly.

A lock plate 3b is located above the rear end portion 35f of the lateral portion 35c. The lock plate 3b is a thin arcuate plate of a fixed width, and is fixed to the base 3 by screws 3c. Above the lock plate 3b, there is located a lock wall portion 29b provided on the lateral wall portion 29 of the table 2. When the rear end portion 35f of the lateral portion 35c is upwardly displaced to cause the lock plate 3b to be held between the rear end portion 35f and the lock wall portion 29b, the rotation of the table 2 is locked. When the rear end portion 35f of the lateral portion 35c is displaced downwards to release the state in which the lock plate 3b is held between the rear end portion and the lock wall portion 29b, the table 2 is placed in the state in which it can rotate with respect to the base 3.

In this way, the lock arm 35 is tilted like a seesaw using the pivot 36 as the fulcrum, and causes the compression spring 38 to act on the opposite side of the rear end portion 35f with respect to the pivot 36, whereby it is possible to cause the lock arm 35 to act as a "lever." Thus, even when the compression spring 38 is a small spring of a relatively small biasing force, it is possible to amplify the biasing force and to exert it to the rear end portion 35f, whereby it is possible to obtain a large rotation lock force with a compact configuration.

In the second lock mechanism 30 configured as described above, in the state in which, the user is performing no operation on the grip portion 32 as shown in Fig. 7, the grip portion 32 is being biased by the compression spring 34 away from the operation cam 33 (to the non-operation position side), so that the mesh teeth 32a thereof are forwardly deviated with respect to the engagement portions 33b of the operation cam 33.

Thus, at this non-operation position, the clutch portion 40 is disengaged, so that the operation cam 33 does not rotate even if the grip portion 32 is rotated, with the grip portion 32 and the operation shaft 31 idling. In this idling state of the grip portion 32, the lock arm 35 is not tilted, so that the table 2 is maintained in the rotation-lock state or maintained in the unlock state.

In contrast, when the user pushes the grip portion 32 to the rear side operation position against the compression spring 34, the mesh teeth 32a enter the interval between the mesh teeth 33a of the operation cam 33, so that the clutch portion is placed in the engaged state in which mutual mesh engagement in the rotating direction is performed. Thus, when the grip portion 32 is rotated to the right or left by approximately 90°, the lock arm 35 is tilted via mesh engagement in the rotating direction of both mesh teeth 32a and 33a, making it possible to lock the table 2 at an arbitrary rotating position. In contrast, it is possible to unlock and allow the table 2 to rotate. As described above, in the case of this embodiment, when the grip portion 32 is rotated to the right as shown in Fig. 9, the rotation lock mechanism 39 is placed in the unlock state. On the other hand, when the grip portion 32 is rotated to the left as shown in Fig. 8, the rotation lock mechanism 30 is placed in the lock state, and the rotating position of the table 2 is locked.

Figs. 2, 3, and 8 show the table 2 in the rotation-lock state. In this rotation lock state, one mesh tooth 33a and one engagement portion 33b of the operation cam 33 abut the stopper surface 39a on the lower surface side of the stopper block 39, and both engagement portions 33b protrude to the right and left. Thus, the vertical portion 35a of the lock arm 35 is displaced downwardly by the biasing force of the compression spring 38, so that the lateral portion 35c is located at the lock position in which it has been tilted clockwise as seen in Fig. 2 using the pivot 36 as the fulcrum. As a result of the lateral portion 35c having been displaced to the lock position, the rear end portion 35f on the rear side of the pivot 36 has been displaced upwards, so that the lock plate 3b on the base 3 side is held between the rear end portion 35f and the lock wall portion 29b of the lateral wall portion 29. The lock plate 3b is firmly held between the rear end portion 35f and the lock wall portion 29b by the biasing force of the compression spring 38. In this way, the lock plate 3b on the base 3 side is firmly held between the rear end portion 35f of the lock arm 35 on the table 2 side and the lock wall portion 29b, whereby the table 2 is in the rotation-lock state, in which it is locked so as to be incapable of rotation.

After this rotation-lock state has been attained, when the user releases the grip portion 32, the grip portion 32 is returned to the non-operation position on the front side by the compression spring 34. At this operation position, the grip portion 32 only idles, so that it is free from malfunction as described above.

In the above rotation-lock state, when the user pushes the grip portion 32 to the operation position on the rear side against the compression spring 34, the mesh teeth 32a are again brought into mesh with the mesh teeth 33a of the operation cam 33 in the rotating direction. Thus, when the grip portion 32 is rotated clockwise by approximately 90° in this pushed-in state as shown in Fig. 9, the other mesh tooth 33a and the other engagement portion 33b abut the left-hand side stopper surface 39b of the stopper block 39 as shown in Fig. 5, with the result that both engagement portions 33b protrude upwards and downwards. As a result, the vertical portion 35a of the lock arm 35 is lifted by the upwardly protruding engagement portion 33b, with the result that the lateral portion 35c is located at the unlock position, where it has been tilted counterclockwise as seen in Fig. 4 using the pivot 36 as the fulcrum. When the lateral portion 35c is thus displaced to the unlock position against the compression spring 38, the rear end portion 35f thereof is displaced downwards, so that the holding of the base 3 side lock plate 3b between the rear end portion 35f and the lock wall portion 29b of the lateral wall portion 29 is released. When the holding of the base 3 side lock plate 3b is released, the rotation-lock state of the table 2 is released (unlocked), so that the table 2 is allowed to rotate.

After the table 2 has been rotated to an arbitrary rotating position, when the grip portion 2 is rotated to the left while it is being pushed in to the operation position, the operation cam 33 moves to the lock position as shown in Fig. 3, with the result that the lock arm 35 moves to the lock position, and the table 2 is locked at this rotation position.

The second lock mechanism 30 described above performs locking and unlocking operations, with the first lock mechanism 20 unlocked. Fig. 6 shows a state in which both the first and second lock mechanisms 20 and 30 have been switched to the unlock state.

In the tabletop cutter 1 of this embodiment, when the rotating position of the table 2 in the rotation-locked state is to be changed, the user grasps the grip portion 32 with, for example, his right hand, and pushes it in to the operation position. At the same time, the user tilts the operation lever 26 to the unlock position below with his thumb to unlock the first lock mechanism 20. At this stage, the second lock mechanism 30 is in the lock state, so that the table 2 cannot be rotated.

While the first lock mechanism 20 is maintained in the unlock state, the grip portion 32 is rotated to the right at that operating position to unlock the second lock mechanism 30. As a result, the table 2 is allowed to rotate. Thus, the user tilts the operation lever 26 to the unlock position located below, and, with the grip portion 32 having been rotated to the right, the grip portion 32 is moved to the right or left, whereby it is possible to rotate the table 2 counterclockwise or clockwise in planar view.

When the rotating position of the table 2 is a predetermined specific angular position (for example, an angle of high frequency of use, such as 15°, 30°, or 45°), releasing the operation of pushing down the operation lever 26 of the first lock mechanism 20 (releasing the thumb) causes the operation lever 26 to be returned to the lock position located above, and the lock pin 21 enters the corresponding lock hole 3a on the base 2 side, whereby the rotating position of the table 2 is locked. In this way, the table 2 is rotation-locked by the first lock mechanism 20. Further, by rotating the grip portion 32 to the left at that operating position, the second lock mechanism 30 is placed in the lock state, and the rotating position of the table 2 is locked more firmly.

When the rotating position of the table 2 is not a predetermined specific angular position, while maintaining the operation of the pushing down the operation lever 26 of the firstly lock mechanism 20, the grip portion 32 is first rotated to the left, whereby the table 2 is rotation-locked by the second lock mechanism 30. After this, by releasing the pushing-down of the operation lever 26 of the first lock mechanism 20, the lock pin 21 is caused to abut between the two adjacent lock holes 3a on the base 3 side. In this case, the first lock mechanism 20 does not function regarding the rotation lock of the table 2.

In the tabletop cutter 1 of the first embodiment configured as described above, the rotating position of the table 2, on which the material W to be cut is placed, is locked by the two systems of rotation lock mechanisms 20 and 30. Of the two systems, the second lock mechanism 30 is provided with the grip portion 32 to be grasped by the user at the time of table rotating operation. In the state in which no operation is being performed thereon, the grip portion 32 is retained at the non-operation position. At this non-operation position, the grip portion 32 idles, and it is impossible to perform locking or unlocking operation on the second lock mechanism 30. Thus, when locking or unlocking the table, the user firstly grasps the grip portion and adjusts one's own wrist position (after firstly idling the grip portion to a position where the wrist angle is easy to maintain), and can push it in as it is to the operation position side to make it possible to rotate the grip portion, which helps enhance the operability of the grip portion.

Further, a lock screw does not need to be rotated again and again as in the case of the conventional screw tightening type rotation lock mechanism, and the grip portion 32 has only to be rotated in a range of approximately 90° to effect locking or unlocking, which helps improve the operability of the second lock mechanism 30, and furthermore, of the tabletop cutter 1.

Further, in the second lock mechanism 30, with one end of the lock arm 35 (the vertical portion 35a) engaged with the operation cam 33, and the other end thereof placed on the pivot 36, a screw connection is effected on the lock arm 35 by tightening the connection screw 37 into the retention column portion 29a on the table 2 side between the pivot 36 and the vertical portion 35a, whereby the lock arm 35 is mounted in a state in which it is biased toward the table 2 side by the compression spring 38. By performing a screw tightening on the retention column portion 29a in this way, the lock arm 35 can be mounted substantially in a floating state with respect to the lower surface of the table 2, whereby it is possible to improve assembility of the lock arm 35, and furthermore, of the lock mechanism 30.

Further, by grasping the grip portion 32 to displace it to the operation position side, and by performing a rotating operation thereon while maintaining the grasping state, it is possible to perform the operation of locking or unlocking the second lock mechanism 30. Thus, the user can perform the operation as a series of operations without having to greatly change the direction in which the force of his or her hand grasping the grip portion is exerted, so that it is possible to reduce a burden on the wrist, which helps improve operability of the lock mechanism.

When the user rotates to the grip portion 32 to the right, the rotation-lock state of the table 2 is released (unlocked), and when the user rotates it to the left, the table 2 is locked so as to be incapable of rotation. In contrast, in the well-known conventional rotation lock mechanism in which the table is rotation-locked through the tightening of a lock screw, the lock screw is rotated to the right to lock the table, and is rotated to the left to unlock the same. In the embodiment shown, the rotating direction of the grip portion 32 is opposite to that in the prior art regarding the locking operation and unlocking operation.

Usually, in the case of a right-handed user, the user lies on the left-hand side of the grip portion 32, and grasps the grip portion 32 with the right hand. In this case, when the user rotates the grip portion 32 grasped with his or her right hand to the right to effect unlocking, and then moves the grip portion 32 to the front side, he of she can rotate the table 2 to the left (clockwise as seen in plan view). In contrast, by pushing the grip portion 32 to the right, the user can rotate the table 2 to the right (counterclockwise as seen in plan view).

In this way, in the case of a right-handed user, the user lies on the left-hand side of the grip portion 32 and grasps the grip portion 32 with his right hand, so that the direction in which the right wrist is twisted at the time of unlocking operation of the grip portion 32 can be an upwardly convex one, which is easier for the user to operate, when rotating the table 2 to the left or right while maintaining the unlock state, whereby the burden on the right wrist can be reduced, which helps to improve the operability of the second lock mechanism 30 and, furthermore, of the tabletop cutter 1.

Further, in the embodiment shown, using the pivot 36 as the fulcrum, the lock arm 35 is tilted such that the vertical portion 35a side thereof and the rear end portion 35f side thereof are displaced in mutually opposite directions, and the lock plate 3b on the base 3 side is held by the biasing force of the compression spring 38 exerted to the opposite side of the rear end portion 35f with respect to the pivot 36 to thereby lock the table 2, and thus, it is possible to cause the lock arm 35 to function as a "lever" using the pivot 36 as the fulcrum. Thus, by appropriately setting the point of action of rear end portion 35f and of the compression spring 38 with respect to the pivot 36, it is possible to arbitrarily set the holding force of the lock plate 3b, whereby an appropriate setting of the rotation-lock force for the table 2 can be facilitated. Further, it is possible to obtain a large rotation-lock force with a small compression spring of a relatively small biasing force.

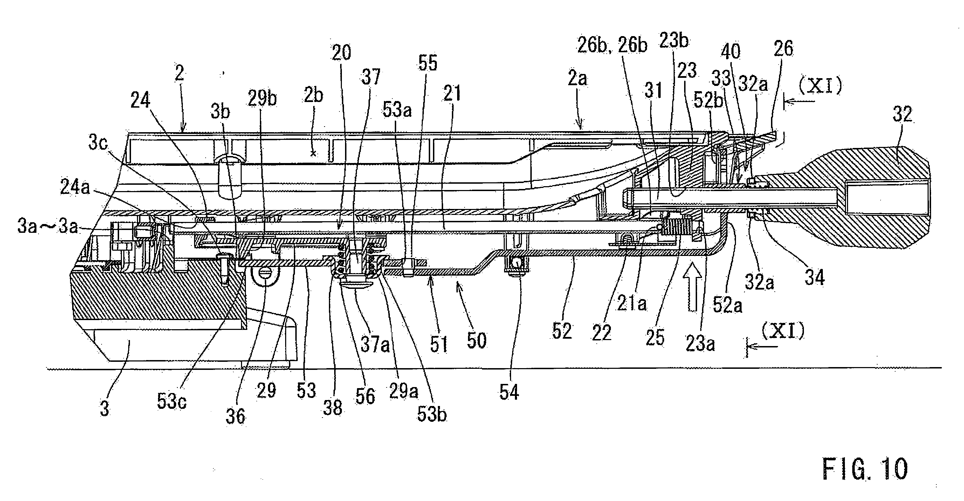

Various modifications can be made to the first embodiment described above. Figs. 10 through 13 show a second lock mechanism 50 according to a second embodiment. Regarding the first lock mechanism 20 and the other components, they may be the same as those of the first embodiment described above, so that they are indicated by the same reference numerals, and a description thereof will be omitted. The second lock mechanism 50 of the second embodiment differs from that of the first embodiment in that the lock arm 35 of the first embodiment is longitudinally (in the length direction) divided into two.

A lock arm 51 of the second lock mechanism 50 of the second embodiment is divided into a front side arm 52 and a rear side arm 53. The rear portion of the front side arm 52 and the front portion of the rear side arm 53 are mutually connected together via a connection pin 55. The front side arm 52 is substantially bent into an L-shape, and a vertical portion 52a on the front side thereof extends upward along the front surface of the extension portion 2a. The vertical portion 52a has a switching hole 52b. The operation cam 33 is located within the switching hole 52b.

Substantially at the center in the longitudinal direction thereof, the front side arm 52 is borne from below by a front side pivot 54 provided on the extension 2a side. Thus, the front side arm 52 is supported such that the front side (the vertical portion 52a side) and the rear side (the connection pin 55 side) thereof are vertically displaced in mutually opposite directions around the front side pivot 54.

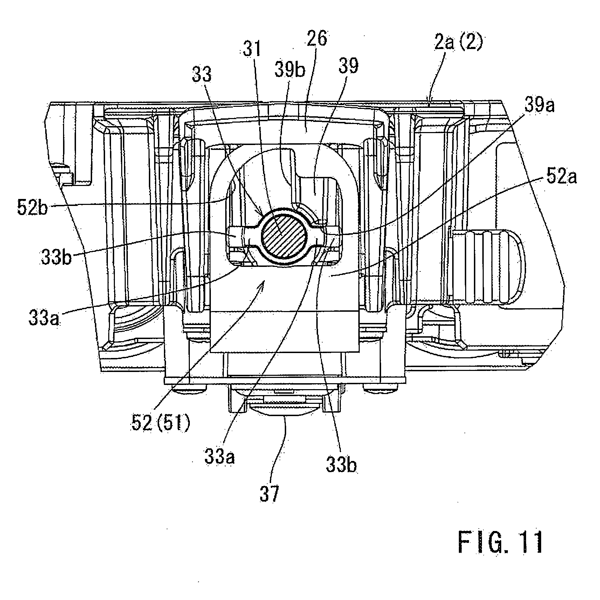

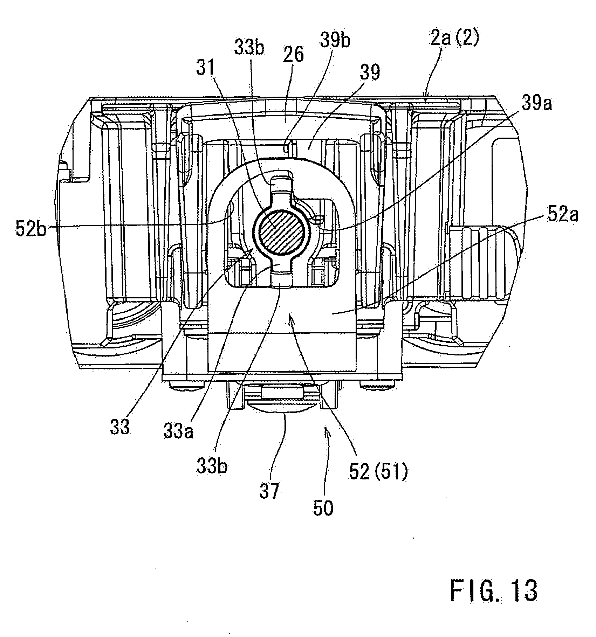

As in the first embodiment, the vertical portion 52a of the front side arm 52 is provided with the switching hole 52b. The operation cam 33 is located within the switching hole 52b. As in the first embodiment, the operation cam 33 is rotated around the operation shaft 31 through rotating operation on the grip portion 32 via the clutch portion 40. Through the rotation of the operation cam 33, the vertical portion 52a is vertically displaced. As shown in Fig. 11, when the vertical portion 52a is upwardly displaced, the second lock mechanism 50 is placed in the lock state, and the rotating position of the table 2 is fixed. In contrast, as shown in Fig. 13, when the vertical portion 52a is downwardly displaced, the second lock mechanism 50 is placed in the unlock state, and the table 2 is allowed to rotate. In the second embodiment, due to the division into the front side arm 52 and the rear side arm 53, the relationship between the lock/unlock state of the second lock mechanism 50 and the moving direction of the vertical portion 35a is opposite to that of the first embodiment. This will be described in detail after the description of the rear side arm 53.

As described above, the front portion of the rear side arm 53 is connected to the rear portion of the front side arm 52 via the connection pin 55. The connection is effected such that the front portion of the rear side arm 53 substantially overlaps the upper side of the rear portion of the front side arm 52. The connection pin 55i s fixed to the front side arm 52. The upper portion of the connection pin 55 is inserted from below into a connection hole 53a provided in the front portion of the rear side arm 53, and the front portion of the rear side arm 53 is connected to the rear portion of the front side arm 52. The connection hole 53a is formed as a groove hole slightly elongated in the longitudinal direction. Thus, within the connection hole 53a, the connection pin 55 can be slightly and relatively displaceable (tiltable) in the longitudinal direction. As a result, the front side arm 52 and the rear side arm 53 are mutually connected together so as to be capable of slightly tilting in the thickness direction (vertically).

As in the first embodiment, the rear portion of the rear side arm 53 is borne from below by a pivot (which is referred to as the rear side pivot 36 in the second embodiment). Between the rear side pivot 36 and the connection pin 55, the rear side arm 53 is biased downwardly by the compression spring 38. The compression spring 38 is attached to the periphery of the retention column portion 29a between the lateral wall portion 29 on the lower surface of the table 2 and a cup-shaped seat 56. The connection screw 37 is mounted to the lower portion of the retention column portion 29a. The seat 56 is retained on the lower portion of the retention column portion 29a by a flange portion 37a of the connection screw 37. The seat 56 is inserted from above into a receiving hole 53b provided in the front portion of the rear side arm 53. The biasing force of the compression spring 38 is exerted to the front side of the rear side arm 53 via the seat 56.

Due to the biasing force of the compression spring 38 exerted to the front side of the rear side pivot 36, a rear portion 53c of the rear side arm 53 is biased upwards. As shown in Fig. 10, the lock plate 3b mounted to the base 3 side is held between the rear portion 53c and the lock wall portion 29b provided on the lateral wall portion 29, whereby the rotating position of the table 2 with respect to the base 3 is fixed. In this way, the rear side arm 53 functions as a "lever" using the rear side pivot 36 as the fulcrum, whereby the biasing force of the compression spring 38 can be strengthened, and the lock plate 3b of the base 3 is firmly held between the rear portion 53c and the lock wall portion 29b, thereby firmly fixing the rotating position of the table 3. This means that the biasing force of the compression spring 38 is exerted to the lock side.

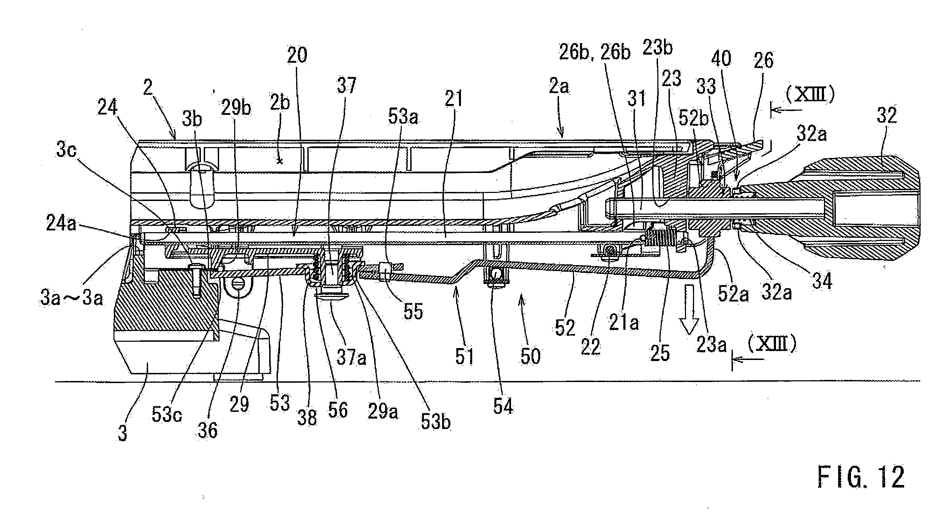

In contrast, as shown in Fig. 12, when the front portion of the rear side arm 53 is displaced upwardly against the compression spring 38, the rear side arm 53 is tilted counterclockwise around the rear side pivot 36, with the result that the rear portion 53c is displaced downwards, and the holding of the lock plate 3b between the rear portion 53c and the lock wall portion 29b is released, so that the second lock mechanism 50 is unlocked to allow the table 2 to rotate.

The front portion of the rear side arm 53 is pushed up through upward displacement of the rear arm portion of the front side arm 52 against the compression spring 38. The rear portion of the front side arm 52 is displaced upwards through clockwise tilting of the front side arm 52 around the pivot 54. At this time, the front side thereof is displaced downwards. Thus, the front side arm 52 is biased counterclockwise (to the lock side) due to the indirect action of the compression spring 38. In this way, the front side arm 52 is borne by the front side pivot 54, and the counterclockwise direction is the spring-biased lock side, with the result that, unlike the first embodiment, the lock state is effected when the front portion of the front side arm 52 (the vertical portion 52a) is displaced upwards as shown in Figs. 10 and 11 in the second embodiment as described above, whereas as described above, as shown in Figs. 12 and 13, the unlock state is effected when it is displaced downwards. Thus, the vertical portion 52a of the front side arm 52 is biased so as to be displaced upwards (toward the lock side) by the indirect action of the compression spring 38.

As shown in Fig. 11, when, through rotation to the left of the grip portion 32, the operation cam 33 is rotated to the lock position, where the engagement portions 33b (mesh teeth 33a) on both sides thereof are situated horizontally, one engagement portion 33b is detached from the lower portion of the switch hole 52b, so that the pushing-down of the engagement portion 33b is released, with the result that the vertical portion 52a is displaced upwards by the indirect action of the compression spring 38. Through the upward displacement of the vertical portion 52a, the front side arm 52 is tilted counterclockwise around the front side pivot in Fig. 10, so that the rear side arm 53 is tilted clockwise by the compression spring 38, with the result that the lock plate 3b is held between the rear portion 53c and the lock wall portion 29b to place the second lock mechanism 50 in the lock state.

In contrast, as shown in Fig. 13, when, through rotation to the right of the grip portion 32, the operation cam 33 is rotated to the unlock position, where the engagement portions 33b (mesh teeth 33a) on both sides thereof are situated vertically, the lower portion of the switching hole 52b is pushed downwards by one engagement portion 33b, so that the vertical portion 52a is displaced downwards against the indirect action of the compression spring 38. When the vertical portion 52a is displaced downwards, the front side arm 52 is tilted clockwise around the front side pivot 54 as shown in Fig. 12, with the result that the front side of the rear side arm 53 is pushed up against the compression spring 38. As a result of the pushing-up of the front side, the rear side arm 53 is tilted counterclockwise around the rear side pivot 36, and the rear portion 53c thereof is displaced downwards. Through the downward displacement of the rear portion 53c, the holding of the lock plate 3b between the rear portion 53c and the lock wall portion 29b is released, and the second lock mechanism 50 is placed in the unlock state.

As shown in Fig. 11, as in the first embodiment, the lock side rotation end of the operation cam 33 is limited by one mesh tooth 33b abutting against the lock side stopper surface 39a (lower surface) of the stopper block 39. In contrast, as shown in Fig. 13, the unlock side rotation end of the operation cam 33 is limited by the other mesh tooth 33b abutting the unlock side stopper surface 39b (side surface) of the stopper block 39. In this way, by rotating the operation cam 33 by approximately 90°, it is possible to perform locking and unlocking operation on the second lock mechanism 50.

Also in the second lock mechanism 50 of the tabletop cutter 1 of the second embodiment described above, the grip portion 32 is moved to the operation position against the compression spring 34, and then the grip portion 32 is rotated, whereby it is possible to switch the second lock mechanism 50 between the lock and unlock states. In contrast, in the state in which no operation is being performed, the grip portion 32 remains at the non-operation position, so that, if rotated, the grip portion 32 only idles and does not cause the operation cam 33 to rotate. And thus, no switching of the lock state or unlock state of the second lock mechanism 50 can be performed.

When performing locking or unlocking operation on the table 2, the user grasps the grip portion 32 adjusting an angle of the wrist, and then pushes the grip portion 32 to the operation position side in order to place the clutch 40 in the engaged state. And then, the grip portion 32 can be rotated in this engaged state, whereby the operation cam 33 is rotated, making it possible to effect switching between the lock and unlock states of the second lock mechanism 50.

Further, by rotating the grip portion 32 in a range of approximately 90°, it is possible to switch the second lock mechanism 50 between the lock and unlock states. Thus, as well as in the first embodiment, operability can be improved in the second lock mechanism 50 of the second embodiment.

Further, in the second lock mechanism 30 of the second embodiment, the lock arm 35, which is formed as one-piece member in the first embodiment, is divided into the front side lock arm 52 and the rear side lock arm 53, and, at the time of mounting the front side lock arm 52, it receives no action of the compression spring 38, so that it is possible to simplify an assembility of the second lock mechanism 50.

Further, as in the first embodiment, the rear side lock arm 53 can be assembled so as to be biased by the compression spring 38 by tightening the connection screw 37 into the retention column portion 29a.

Further, in the second lock mechanism 50 of the second embodiment, when the grip portion 32 is rotated to the right, the rotation-lock state of the table 2 is unlocked, and when it is rotated to the left, the table 2 is locked so as to be incapable of rotating, which means the operating direction is opposite to that of the conventional lock mechanism, which is based on the tightening of the lock screw fixed to the grip portion. Thus, in the case of a right-handed user, after a pushing operation of the grip portion 32 to the operation position side, the grip portion 32 is rotated to the right to effect unlocking. Since it is possible to rotate the table while maintaining a wrist angle at this point, it is possible to reduce a burden on the right wrist as well as in the first embodiment, which also helps improve an operability of the second lock mechanism 50.

The first and second embodiments described above can be further modified. For example, while the tabletop cutter 1 described above by way of example is provided with the two systems of rotation lock mechanisms 20 and 30 (50), the present teachings are also applicable to the rotation lock mechanism of a tabletop cutter provided with no first lock mechanism 20 shown in the above example.

Further, the present teachings are also applicable to a tabletop cutter provided with no upper and lower slide mechanisms 5 and 6 or lateral tilting mechanism 4.

Further, while in the above configuration shown by way of example the grip portion 32 is fixed to the operation shaft 31 and both of them rotate integrally in the axial direction and around the axis, it is also possible for the operation shaft to be provided so as to be fixed in position in the axial direction and around the axis with respect to the table extension portion 2a, with the grip portion being supported so as to be rotatable and axially movable with respect to this operation shaft.

Further, while in the above configuration described by way of example the grip portion 23 is rotated to the right to effect unlocking and is rotated to the left to effect locking, the rotating directions in the locking and unlocking operations may be reversed. To reverse the rotating directions, the position of the stopper block 39, for example, is changed from the position on the right-hand upper side to the position on the left-hand upper side of the operation cam 33.

Further, while in the configuration described above by way of example the grip portion 32 is rotated by approximately 90° to effect locking and unlocking, the rotating operation angle for the grip portion may be arbitrarily set.

Further, in the case of a configuration in which the operation of moving the grip portion between the operation position and the non-operation position is omitted, the mesh teeth thereof are constantly in mesh with the mesh teeth of the operation cam, and the lock mechanism is locked and unlocked through simple rotation of the grip portion, unlocking can be effected through rotation to the right of the grip portion and locking can be effected through rotation to the left of the same, whereby it is possible to reduce a burden on a user's right wrist at the time of rotating the table as described above.

## Claims

1. A tabletop cutter comprising a table (2) supported on a base (3) so as to be horizontally rotatable,
wherein the table (2) is provided with a grip portion (32) to be grasped at the time of rotating the table, a lock arm for limiting rotation of the table (2) with respect to the base (3), and a clutch portion (40) for transmitting a rotational movement due to a rotating operation of the grip portion (32) to the lock arm (35; 51); and
wherein switching can be effected between a state in which the rotational movement due to the rotating operation of the grip portion (32) is transmitted to the lock arm (35; 51) via the clutch portion (40) and a state in which the transmission of the rotational movement is blocked,
wherein the grip portion (32) is supported so as to be rotatable around an axis thereof via an operation shaft (31) and to be capable of being displaced between an operation position and a non-operation position in an axial direction,
wherein, in the state in which the grip portion (32) is displaced to the operation position, the rotational movement due to the rotating operation of the grip portion (32) is transmitted to the lock arm (35; 51) via the clutch portion (40); and
wherein, in the state in which the grip portion is displaced to the non-operation position, the rotational movement due to the rotating operation of the grip portion (32) is blocked at the clutch portion (40) and is not transmitted to the lock arm,
wherein the tabletop cutter further comprises an operation cam (33) configured to be rotated around the axis of the operation shaft (31) to move the lock arm (35; 51) to a lock position or an unlock position, and
wherein when the grip portion (32) is displaced to the operation position with respect to the operation cam (33), the clutch portion (40) is engaged, making it possible to transmit the rotational movement due to the rotating operation of the grip portion (32) to the lock arm (35; 51).

2. The tabletop cutter according to claim 1, wherein a compression coil spring (34) is provided between the grip portion (32) and the operation cam (33), with the grip portion (32) being spring-biased to a non-operation position side.

## Patentansprüche

1. Tischoberseitentyp-Schneidemaschine, die einen Tisch (2) aufweist, der so auf einer Basis (3) gelagert ist, dass er horizontal drehbar ist,
bei der der Tisch (2) mit einem zum Zeitpunkt des Drehens des Tisches zu greifenden Griffteil (32), einem Verriegelungsarm zum Begrenzen der Drehung des Tisches (2) mit Bezug auf die Basis (3), und einem Kupplungsteil (40) zum Übertragen einer Drehbewegung aufgrund einer Drehbetätigung des Griffteils (32) an den Verriegelungsarm (35; 51) vorgesehen ist, und
bei der ein Wechsel zwischen einem Status, in welchem die Drehbewegung aufgrund der Drehbetätigung des Griffteils (32) an den Verriegelungsarm (35; 51) über den Kupplungsteil (40) übertragen wird, und einem Status, in welchem die Übertragung der Drehbewegung blockiert ist, ausgeführt werden kann,
bei der der Griffteil (32) so gelagert ist, dass er um dessen Achse mittels einem Betätigungsschaft (31) drehbar ist und dass er zwischen einer Betätigungsposition und einer Nichtbetätigungsposition in einer axialen Richtung versetzt werden kann,
bei der, in dem Status, in welchem der Griffteil (32) in die Betätigungsposition versetzt ist, die Drehbewegung aufgrund der Drehbetätigung des Griffteils (32) an den Verriegelungsarm (35; 51) über den Kupplungsteil (40) übertragen wird, und
bei der, in dem Status, in welchem der Griffteil in die Nichtbetätigungsposition versetzt ist, die Drehbewegung aufgrund der Drehbetätigung des Griffteils (32) an dem Kupplungsteil (40) blockiert ist und nicht an den Verriegelungsarm übertragen wird,
bei der die Tischschneidemaschine weiter eine Betätigungsnocke (33) aufweist, die konfiguriert ist, das sie um die Achse des Betätigungsschaftes (31) zum Bewegen des Verriegelungsarms (35; 51) in eine Verriegelungsposition oder eine unverriegelte Position bewegt werden kann, und
bei der, wenn der Griffteil (32) in die Betätigungsposition mit Bezug auf die Betätigungsnocke (33) versetzt ist, der Kupplungsteil (40) in Eingriff steht und es ermöglicht, dass die Drehbewegung aufgrund der Drehbetätigung des Griffteils (32) an den Verriegelungsarm (35; 51) übertragen wird.

2. Tischoberseitentyp nach Anspruch 1, bei der eine Kompressionsschraubenfeder (34) zwischen dem Griffteil (32) und der Betätigungsnocke (33) mit dem Griffteil (32) an eine Nichtbetätigungspositionseite vorgespannt vorgesehen ist.

## Revendications

1. Outil de découpage sur un tableau de table (2) supportée sur une base (3) afin de pouvoir être tourné horizontalement,
dans laquelle la table (2) est pourvue d'une portion de prise (32) pour être saisie au moment de tourner la table, un bras de verrouillage pour limiter la rotation de la table (2) par rapport à la base (3), et une portion d'embrayage (40) pour transmettre un mouvement rotatif dû à une opération de rotation de la portion de prise (32) vers le bras de verrouillage (35 ; 51) et
dans laquelle le changement peut être effectué entre un état dans lequel le mouvement rotatif dû à l'opération de rotation de la portion de prise (32) est transmis au bras de verrouillage (35 ; 51) via la portion d'embrayage (40) et un état dans lequel la transmission du mouvement rotatif est bloqué,
dans laquelle la portion de prise (32) est supportée afin d'être tournante autour d'un axe de celle-ci via un arbre d'opération (31) et être capable d'être déplacée entre une position de fonctionnement et une position de non-fonctionnement dans une direction axiale,
dans laquelle, dans l'état dans lequel la portion de prise (32) est déplacée à la position de fonctionnement, le mouvement rotatif dû à l'opération de rotation de la portion de prise (32) est transmis au bras de verrouillage (35 ; 51) via la portion d'embrayage (40) ; et
dans laquelle, dans l'état dans lequel la portion de prise est déplacée vers la position de non-fonctionnement, le mouvement rotatif dû à l'opération de rotation de la portion de prise (32) est bloqué à la portion d'embrayage(40) et non transmis au bras de verrouillage,
dans laquelle l'outil de découpage sur un tableau de table comprend en plus une came de fonctionnement (33) configurée pour être pivotée autour de l'axe de l'arbre d'opération (31) pour bouger le bras de verrouillage (35 ; 51) vers une position verrouillée ou une position non verrouillée, et
dans laquelle quand la portion de prise (32) est déplacée vers la position de fonctionnement par rapport à la came de fonctionnement (33), la portion d'embrayage (40) est embrayée, rendant possible la transmission du mouvement rotatif dû à l'opération de rotation de la portion de prise (32) vers le bras de verrouillage (35 ; 51).

2. L'outil de découpage sur un tableau de table selon la revendication 1, dans laquelle un ressort hélicoïdal de compression (34) est agencé entre la portion de prise (32) et la came de fonctionnement (33), avec la portion de prise (32) étant sollicitée élastiquement vers une position de non fonctionnement.
